# EUROPÄISCHE PATENTSCHRIFT

(11) **EP 0 642 862 B1**
(45) Veröffentlichungstag und Bekanntmachung des Hinweises auf die Patenterteilung: **28.05.1997**
(21) Anmeldenummer: 94113930.5
(22) Anmeldetag: 06.09.1994
(51) Int. Cl.: B23B 45/00, B23Q 39/02, B25F 3/00

(54) **Zweifach-Werkzeugträger für Handbohrmaschinen**
Twin tool-holder for handheld drilling machine
Porte-outil double pour perceuse manuelle

(30) Priorität: 09.09.1993 DE 9313602 U
(43) Veröffentlichungstag der Anmeldung: 15.03.1995
(73) Patentinhaber: Gobbers, Walter, D-89542 Herbrechtingen (DE); Gobbers, Dieter, D-89520 Heidenheim (DE)
(72) Erfinder: Gobbers, Walter, D-89542 Herbrechtingen (DE); Gobbers, Dieter, D-89520 Heidenheim (DE)
(74) Vertreter: Weitzel, Wolfgang, Dr.-Ing. Patentanwalt

(56) Entgegenhaltungen:
- DE-A- 3 831 132
- DE-A- 3 908 586
- DE-C- 866 124
- US-A- 5 149 230

## Beschreibung

Die Erfindung betrifft einen Zweifach-Werkzeugträger für Handbohrmaschinen.

Ein solcher Werkzeugträger, jedoch in Dreifach-Ausführung, ist in der Offenlegungsschrift DE 38 31 132 A1 dargestellt. Dieser Werkzeugträger besteht aus einem Grundkörper, der einen um 45° zur Maschinenachse geneigten, drehbar gelagerten 90° Kegelstumpf aufnimmt, der im 120°-Winkel sternförmig und rechtwinklig zur Kegelstumpfmantelfläche die drei Werkzeugaufnahmen trägt.

Nachteilig bei diesem Stand der Technik ist, daß die Konstruktion nur aufwendig mit Kegelradverzahnung bewerkstelligt ist und dadurch in der Herstellung teuer und aufwendig ist.

US 5 149 230 zeigt und beschreibt einen Zweifach-Werkzeugträger für Handbohrmaschinen. Hierbei sind zwei Wellen vorgesehen, die miteinander fluchten und die gemeinsam um eine Achse verschwenkbar sind.

Ein weiteres Beispiel aus dem Stand der Technik ergibt sich aus DE-C-86 61 24. Dieses Dokument beschreibt einen Zweifach-Werkzeugträger, bei dem die beiden Wellen der Werkzeuge einen Winkel miteinander bilden, der das jeweils nicht eingesetzte Werkzeug aus dem Arbeitsbereich ausschwenkt. Außerdem ist eine Vorrichtung vorgesehen, die die beiden Werkzeugaufnahmewellen wechselseitig kraftschlüssig mit der Antriebswelle der Bohrmaschine verbindet. Jedoch liegen die beiden Werkzeugaufnahmewellen einerseits und die Antriebswelle der Bohrmaschine andererseits in zwei verschiedenen Ebenen. Die Betätigung des Schwenklagers ist umständlich. Die Bedienungsperson nämlich die Hände von der Arbeitsmaschine absetzen, um eine Schwenkbewegung des Schwenklagers durchzuführen.

Der Erfindung liegt die Aufgabe zugrunde, einen Zweifach-Werkzeugträger derart zu gestalten, daß er sich kostengünstig herstellen läßt, daß er ein geringes Gewicht hat, und daß er leicht bedienbar ist.

Die Aufgabe wird dadurch gelöst, daß
(a) es ist ein drehfest mit der Antriebswelle verbundener Mitnehmer vorgesehen ;
(b) es ist mindestens eine Kulissenführung für das Schwenklager vorgesehen, die die Schwenkbewegung des Schwenklagers führt, so daß die jeweils in Arbeitsstellung befindliche Welle drehfest mit dem Mitnehmer verbunden ist ;
(c) die beiden Werkzeugaufnahmewellen sind um eine zu ihrer Ebene senkrechten Schwenkachse verschwenkbar ;
(d) das Schwenklager weist einen Schwenkzapfen auf, der koaxial zur Schwenkachse verläuft ;
(e) der Schwenkzapfen ist in einem Handgriff gelagert ;
(f) am Handgriff ist ein Betätigungsorgan vorgesehen, mit dem das Aus- bzw. Einrasten der mechanischen Verriegelung betätigbar ist. Nachfolgend
sind unterschiedliche Ausführungsbeispiele des erfindungsgemäßen Werkzeugträgers in den Figuren gezeigt.

Darin ist im übrigen folgendes dargestellt:
- Figur 1 - 3:: Werkzeugträger im seitlichen Schnitt.
- Figur 4 + 5:: Werkzeugträger im horizontalen Schnitt.
- Figur 6 - 11:: Werkzeugträger in der Draufsicht in unterschiedlichen Stellungen.
- Figur 12a:: Darstellung des erfindungsgemäßen Mitnehmers und der dazu passenden Welle aus den Figuren 1 - 5.
- Figur 13 + 14:: Ausführungsform mit Stirnrad.
- Figur 15 - 20:: Weitere Ausführungsform mit Stirnrad.

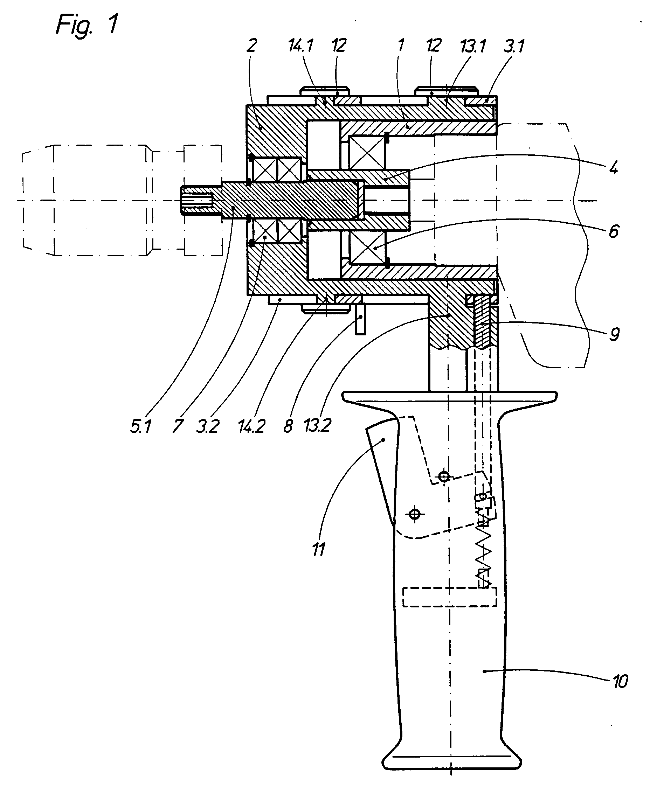

Die Figuren 1-11 zeigen eine erfindungsgemäße Ausführungsform eines Werkzeugträgers mit zwei Arbeitswellen, die wechselweise durch Einschwenken mit der Antriebswelle der Bohrmaschine gekoppelt werden. Wobei in diesem Beispiel auf der einen Welle gestrichelt gezeichnet ein Bohrfutter angesetzt ist, während auf der anderen Welle ein Einsatz für eine Schrauberklinge vorgesehen ist.

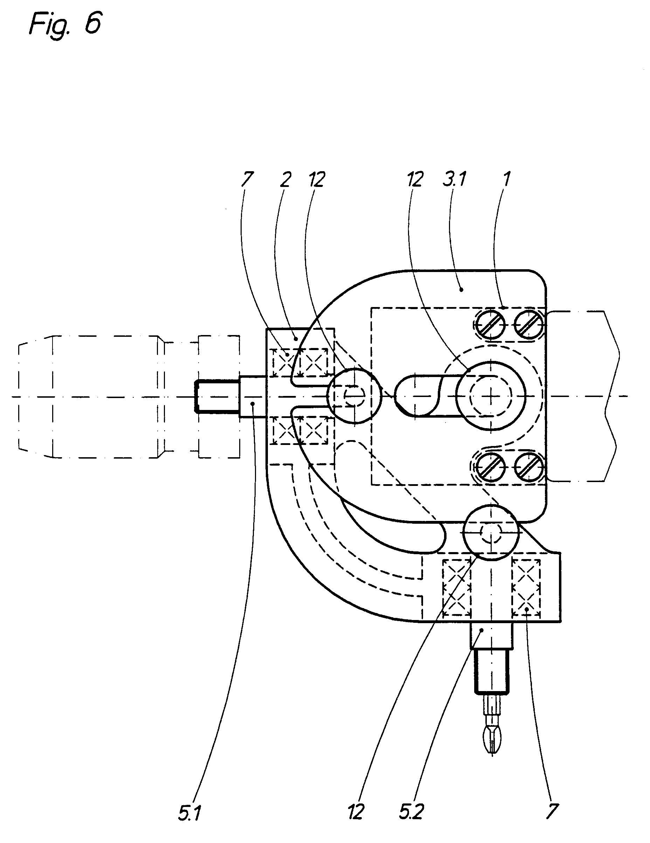

Figur 1 zeigt die erfindungsgemäße Ausführung im Querschnitt entlang einer zentralen vertikalen Ebene. Es ist zentral die Glocke 1 des Werkzeugträgers zu sehen, die die direkte Verbindung zur Bohrmaschine (gestrichelt dargestellt) herstellt. Dies kann über Klemmschrauben im Falle eines variablen Vorsatzes geschehen bzw. integriert in die eigentliche Bohrmaschine sein, wenn der Werkzeugträger nicht abnehmbar vorgesehen ist. Im Frontbereich der Glocke ist eine Lagerung 6 vorgesehen, die den Mitnehmer 4, welcher mit der Antriebswelle der Bohrmaschine verbunden ist, drehbar lagert. In dem Mitnehmer ist im dargestellten Beispiel die eigentliche Welle 5.1 eingeführt dargestellt. Das heißt, die Welle ist sowohl kraftschlüssig bezüglich der Drehung mit dem Mitnehmer verbunden, als auch so eingesteckt, daß die Schlagwirkung einer Schlagbohrmaschine auf die Welle 5.1 übertragen werden kann. Die Welle ihrerseits wird durch das Schwenklager 2 über eine Lagerung 7 gelagert, wobei die Führung der Welle so gestaltet ist, daß ein axiales Spiel es ermöglicht, die Schlagbohrwirkung zu übertragen, ohne die Lager zu beschädigen. Das Schwenklager 2 selbst sitzt auf der Glocke 1 und weist jeweils oben und unten zwei Paare von Zapfen 14.1, 14.2 und 13.1, 13.2 auf, die wiederum in Aussparungen der oben und unten über dem Schwenklager angeordneten Kulisse 3.1 und 3.2 eingreifen. Die Aussparungen der Kulisse 3.1 sind, wie es aus den Figuren 6-11 zu sehen ist, so gestaltet, daß ein Umschwenken des Schwenklagers vom Betrieb der Welle 5.1 zum Betrieb der Welle 5.2 so erfolgt, daß zunächst eine axiale Vorwärtsbewegung des Schwenklagers ausgeführt wird, wodurch eine Entkoppelung der jeweiligen in Betrieb befindlichen Welle 5.1 oder 5.2 ausgeführt wird, danach erfolgt ein Seitwärtsschwenk geführt durch die Kulisse um etwa 90°, wodurch die bisher nicht im Einsatz befindliche Welle in axiale Deckung mit dem Mitnehmer gebracht wird und danach wieder eine axiale Rückwärtsbewegung des Schwenklagers, wodurch die neue Welle sich in den Mitnehmer 4 zumindest drehschlüssig einsetzt.

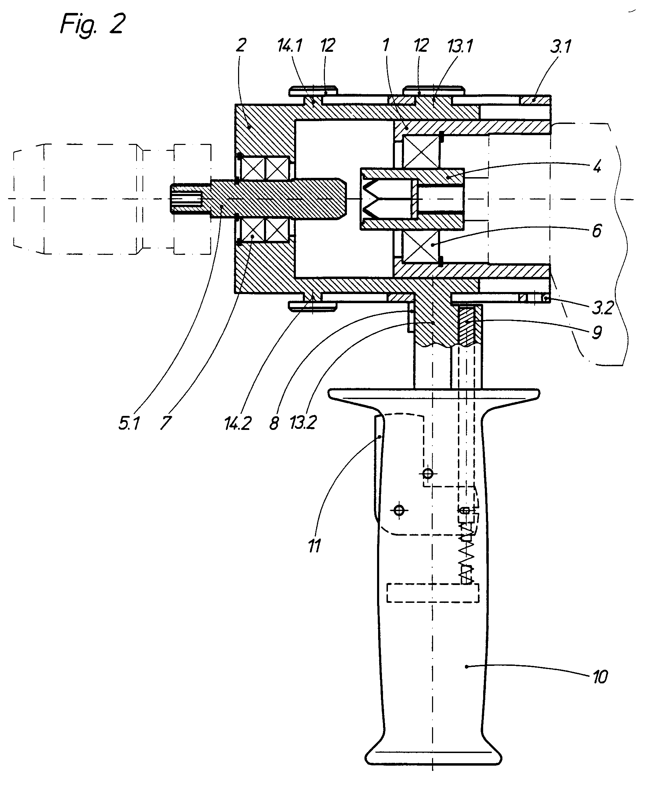

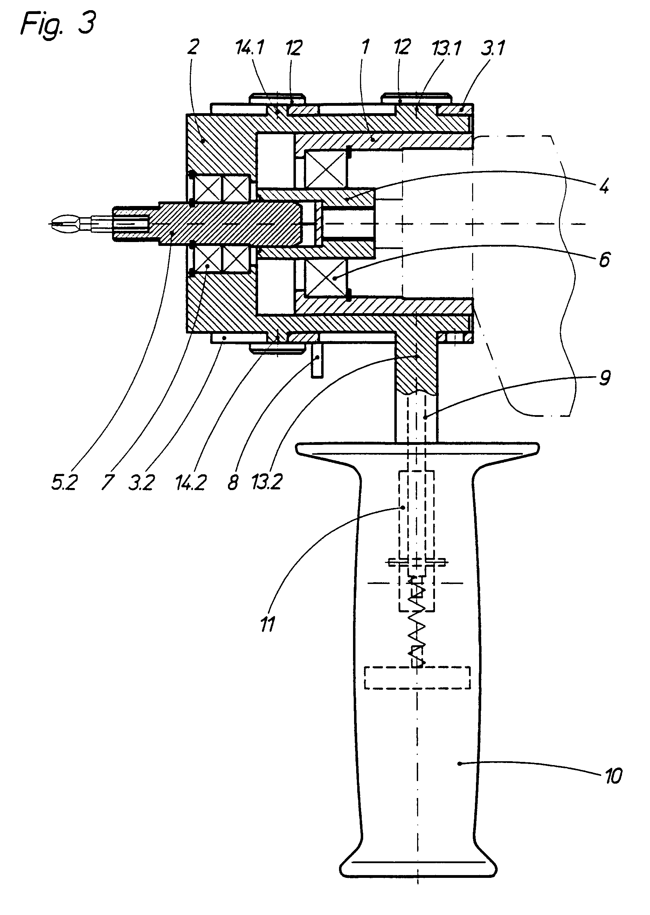

Die Figur 2 zeigt die Situation des nach vorne geschobenen Schwenklagers, so daß ein freier Raum zwischen der Welle 5.1 und dem Mitnehmer 4 entsteht, während die Figur 3 die neue Endsituation darstellt, in der die Welle 5.2 in den Mitnehmer eingeführt ist. In dem Beispiel der Figur 3 ist deutlich sichtbar, daß die Welle 5.2 auf der Mitnehmerseite kürzer ausgebildet ist als die Welle 5.1, so daß in diesem Bereich ein Spiel entsteht, wodurch auch bei eingeschalteter Schlagbohrfunktion der Schlagbohrmaschine keine Schlagwirkung auf die Welle 5.2 übertragen werden kann. Gleichzeitig ist die Welle 5.2 auch in axialer Richtung ohne Spiel zu ihrer Lagerung ausgebildet, so daß keine axiale Bewegung der Welle 5.2 während des Betriebes entsteht.

In den Figuren 1-3 ist gleichzeitig ein Handgriff 10 dargestellt, der in der Verlängerung des Zapfens 13.2 angesetzt ist, wobei in dem Handgriff 10 ein durch einen Finger betätigbarer Hebel 11 vorgesehen ist, der einen Raststift 9 auf- und niederbewegt, und durch eine entsprechende Bohrung in der Kulisse zu einem Einrasten des Raststiftes in die Kulisse in den gewünschten Arbeitspositionen führt. Mit Hilfe dieses Handgriffes ist es sehr leicht möglich, die oben beschriebene Schwenkbewegung des Schwenklagers durchzuführen, ohne daß ein Absetzen der Hände von der Arbeitsmaschine notwendig wird. Das heißt, über den Handgriff ist zunächst die Entriegelung des Schwenklagers vorzunehmen, danach eine axiale Vorwärtsbewegung mit darauffolgender Schwenkbewegung und der darauf wieder folgenden axialen Rückwärtsbewegung und anschließendes Loslassen des Hebels 11, wodurch wiederum der Raststift 9 einrastet und das Schwenklager fixiert, so daß die mit dem Werkzeugträger verbundene Maschine wieder einsatzbereit ist.

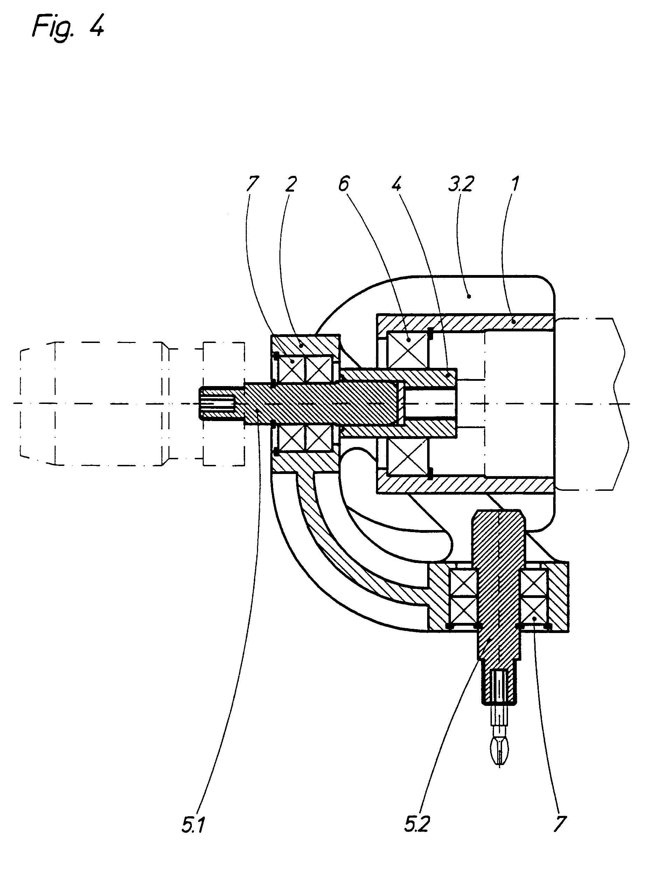

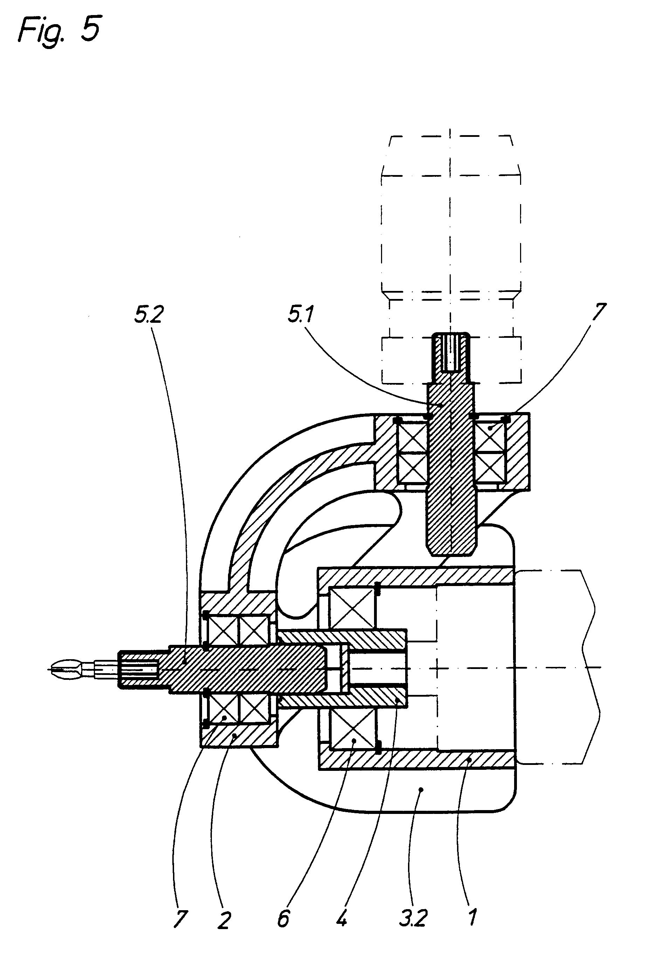

Die Figuren 4 und 5 zeigen Schnittzeichnungen des Schwenklagers von oben betrachtet, wobei die Figur 4 der Arbeitsstellung der Figur 1 und die Figur 5 der Arbeitsstellung der Figur 3 entspricht. Die Bezugszeichen in den Zeichnungen sind so gewählt daß jeweils gleiche Teile mit gleichen Bezugszeichen benannt sind.

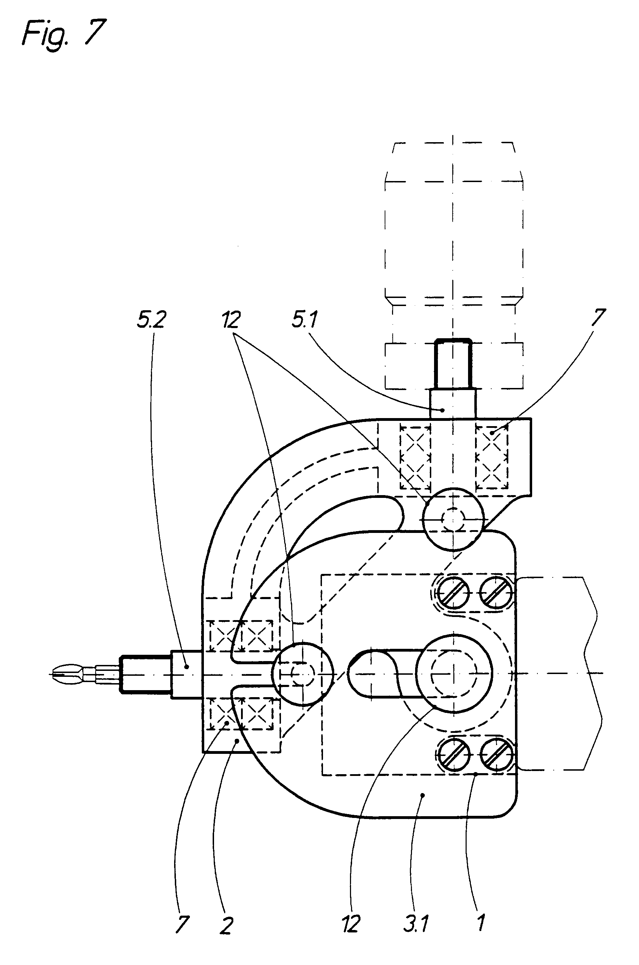

Entsprechend den Figuren 4 und 5 zeigen die Figuren 6 und 7 Draufsichten des Werkzeugträgers in den beiden zuvor dargestellten Arbeitspositionen.

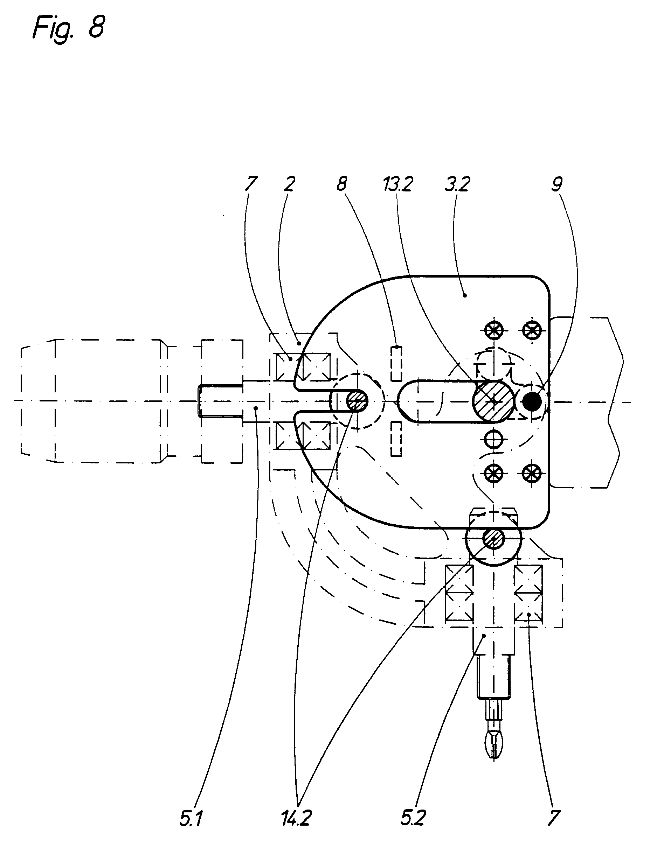

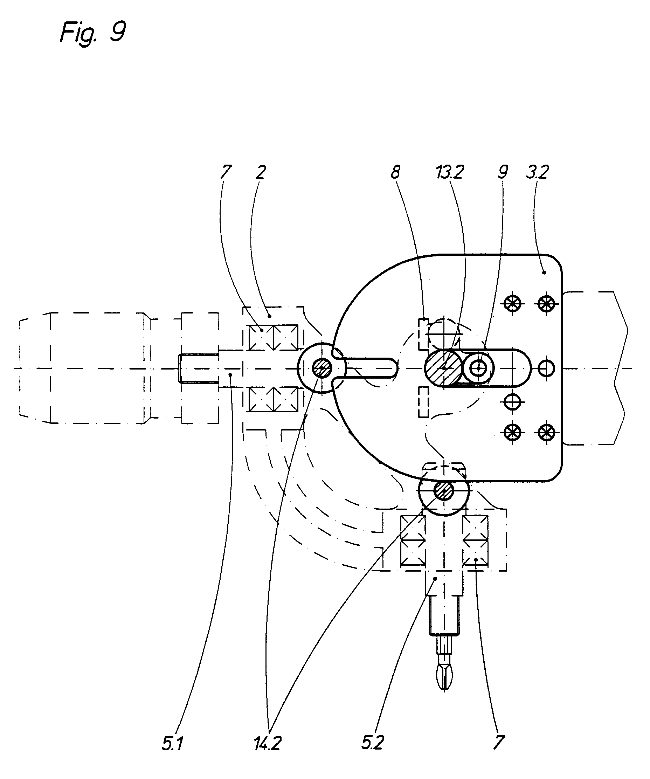

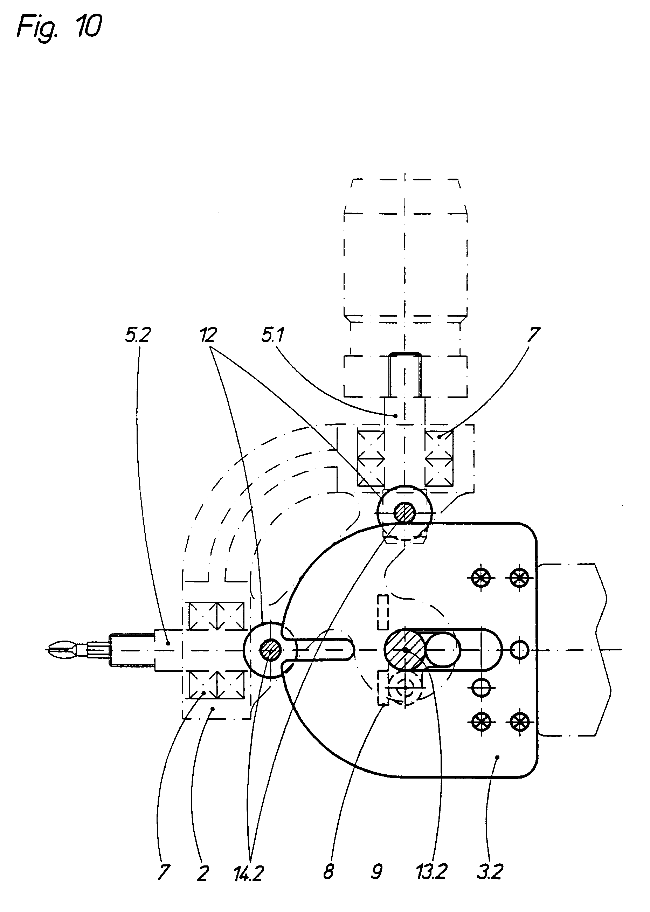

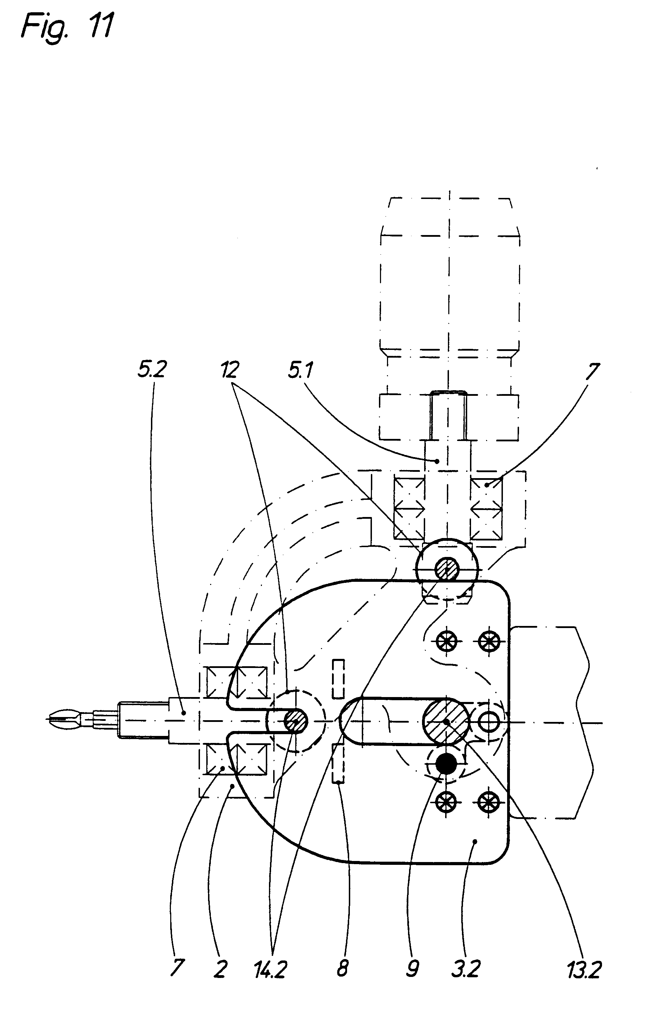

Die Figuren 8-11 verdeutlichen nochmals den Übergang des Schwenklagers von einer ersten zu einer zweiten Arbeitsposition, wobei in den Figuren jeweils die Draufsicht gewählt ist und besonders durch durchgehende Zeichnung die untere Kulisse 3.2 mit den Zapfen 13.2 und 14.2 dargestellt ist, während der Rest des Werkzeugträgers gestrichelt dargestellt ist. Die Figur 8 zeigt die erste Arbeitsposition, in der die Welle 5.1 betriebsbereit ist mit ihrem aufgesetzten Bohrfutter. Die Zapfen 14.2 und 13.2 sind in den Ausschnitten der Kulisse nach hinten gefahren, und der Raststift des Handgriffes 9 ist eingeriegelt. Die nächste Situation zeigt die Figur 9. In dieser Situation ist das Schwenklager nach vorne verschoben, bis der Zapfen 13.2 an das Ende der Aussparung in der Kulisse angekommen ist, und der Zapfen 14.2 aus dem Schlitz der Kulisse herausgeführt ist. Die untere Platte 3.2 ist mit einem Steg 8 versehen, der als Anschlag und Einführungshilfe für den Zapfen 14.2 dient und auch ein überderehen verhindert. Die Figur 10 zeigt sodann die Situation nach erfolgter Rechtsschwenkung, jedoch im noch nicht eingekoppelten Zustand. Es ist weiterhin der Zapfen 13.2 in der vorderen Stellung, während jedoch die Welle 5.1 um etwa 90° nach rechts geschwenkt ist, und die Welle 5.2 mit dem dargestellten Schrauberaufsatz sich in der Einführposition in den Mitnehmer 4 befindet. Figur 11 zeigt schließlich die neue Arbeitsstellung des Werkzeugträgers, in der die Welle 5.2 mit dem Schrauberaufsatz zurückgefahren wurde und der Raststift 9 des Handgriffes sich in einer um 90° versetzten Bohrung eingerastet befindet, so daß ein ungewolltes axiales Ausschwenken des Schwenklagers nicht mehr möglich ist und somit die Arbeitssituation wieder hergestellt ist.

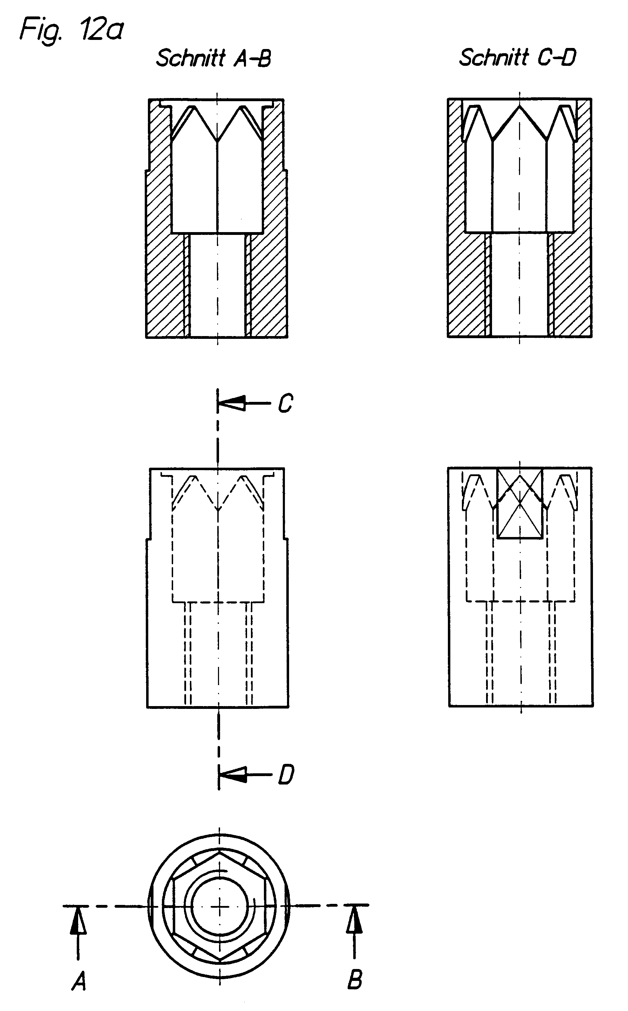

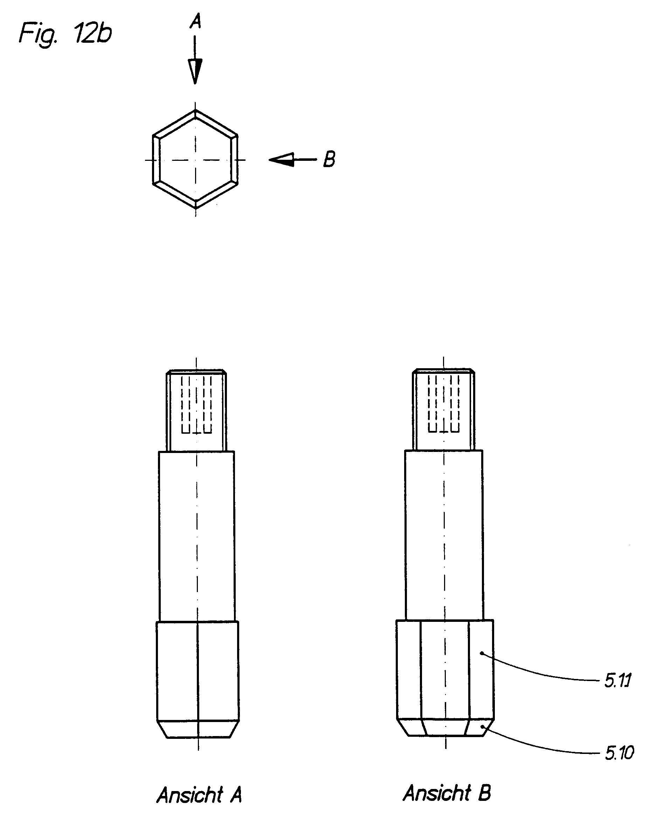

Um eine möglichst problemlose Handhabung und ein möglichst problemloses Wechseln von einer zur anderen Arbeitsstellung zu ermöglichen, ist es notwendig, eine Koppelung von Mitnehmer 4 zu der Welle 5.1 oder 5.2 jederzeit zu gewährleisten, egal in welcher relativen Drehsituation sich die beiden Wellen zueinander befinden. Das heißt, es muß durch einfaches Zurückschieben ein automatisches Einrasten der Welle 5.1 oder 5.2 in den Mitnehmer 4 gewährleistet sein. Erfindungsgemäß wird dies durch eine Ausführung des Mitnehmers und der Welle entsprechend den Figuren 12a und 12b bewirkt.

Figur 12a zeigt den Mitnehmer in verschiedenen Schnittsituationen, wobei dargestellt ist, daß der Mitnehmer aus einem Innenvielkant besteht, dessen vordere Wandung je Fläche des Vielkants V-förmig eingeschnitten ist, wodurch ein dazu umgekehrter Außenvielkant (Welle 5.1 oder 5.2) automatisch sich in die richtige Stellung dreht.

Figur 12b zeigt den erfindungsgemäß angefasten Außensechskant, der in Verbindung mit dem erfindungsgemäß gestalteten Innenvielkant die gewünschte automatische Anpassung bewirkt. Es ist der Außenvielkant in der Draufsicht zu sehen mit seinen darunter abgebildeten Ansichten A und B. Die Zeichnung zeigt deutlich die flache Anfasung am Ende des Sechskantes entsprechend den jeweiligen Außenflächen in den jeweiligen Ansichten dar.

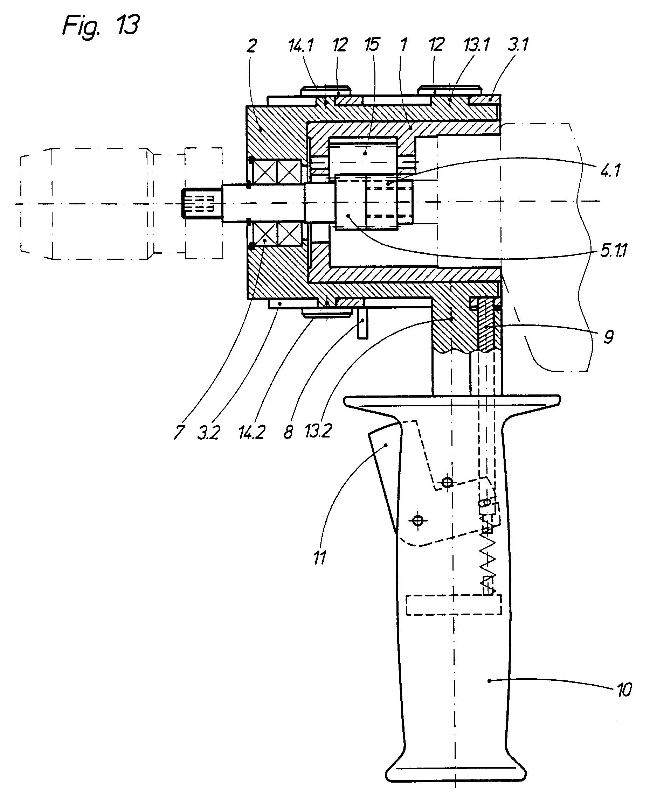

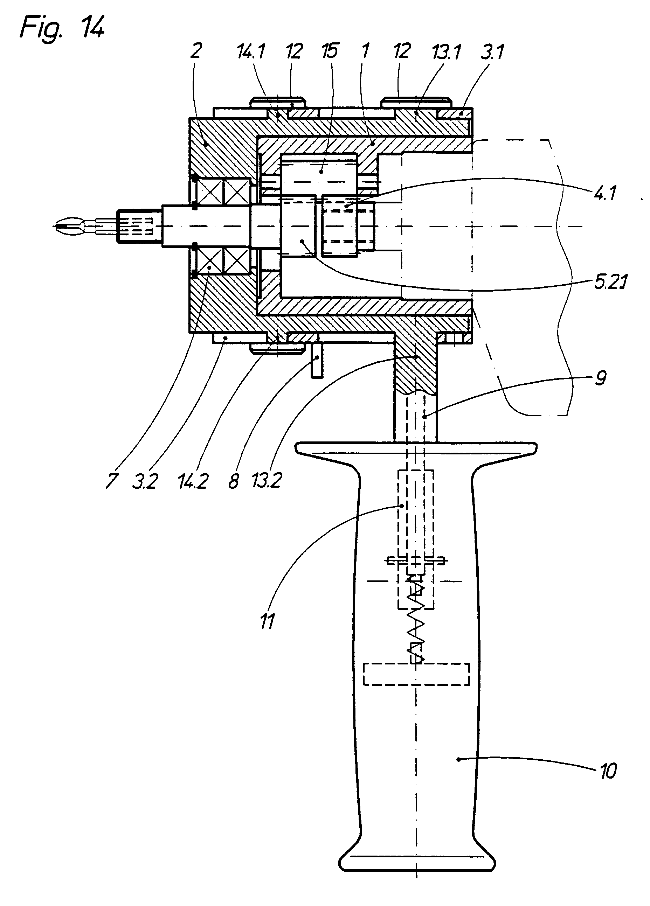

Die Figuren 13 und 14 zeigen eine andere Ausführungsvariante des erfindungsgemäßen Gedankens, der in den Figuren 1 - 11 beschrieben wurde, wobei Figur 13 der Figur 1 entspricht und die Figur 14 der Figur 3 entspricht. Der Unterschied in den beiden Ausführungsformen liegt darin, daß die Drehmomentübertragung zwischen der Antriebs- und Arbeitswelle über ein koppelndes Stirnrad erfolgt. Hierzu ist die Antriebswelle an ihrem Ende mit einem Stirnrad 4.1 versehen, während die Wellen 5.1 und 5.2 an dem angetriebenen Ende mit einem Stirnrad 5.1.1 versehen sind. In der Glocke 1 ist radial versetzt zur Antriebswelle der Bohrmaschine ein weiteres über die beiden Stirnräder 5.1.1 und 4.1 übergreifendes Stirnrad 15 angebracht und so gelagert, daß es getriebeähnlich die beiden Stirnräder 5.2.1 und 4.1 antreibt, wenn die entsprechende Welle in Arbeitsstellung steht.

Figur 14 zeigt die gleiche Vorrichtung wie in Figur 13, jedoch ist in diesem Falle die Welle 5.2 in Arbeitsstellung. Entsprechend dem erfindungsgemäßen Gedanken ist bei dieser Welle 5.2 die Schlagbohrvorrichtung der Bohrmaschine außer Kraft gesetzt, indem zwischen den beiden Wellenenden der Antriebswelle und der Abtriebswelle ein Spalt vorgesehen ist.

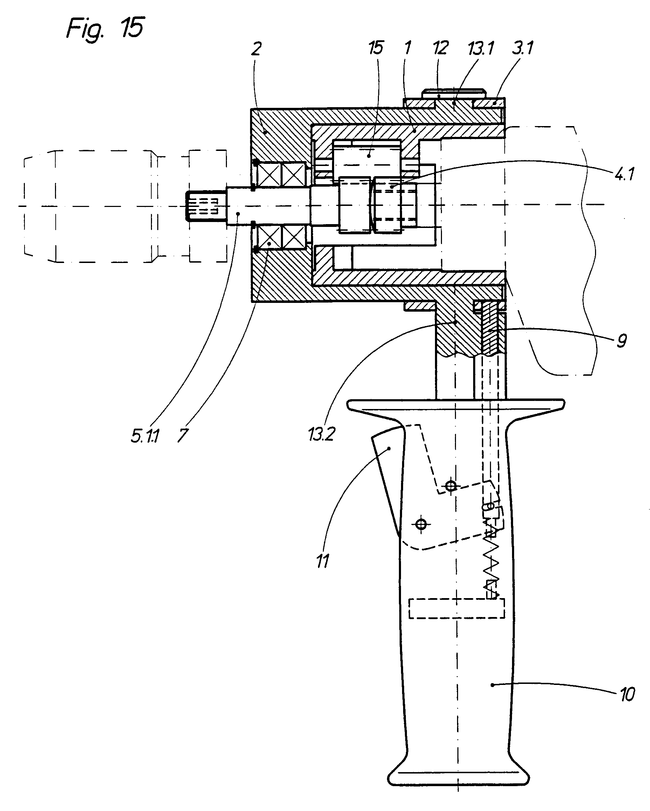

Die Figuren 15 - 20 zeigen eine den vorhergehenden Figuren entsprechende jedoch vereinfachte Vorrichtung. Bei diesem Wechselhalter wurde auf die axiale Bewegungsmöglichkeit zum Kuppeln und Entkuppeln der Antriebs- und Abtriebswellen verzichtet, sodaß eine Drehung lediglich um die Drehachse 13.1 und 13.2 möglich ist. Die Ausgestaltung der Kopplung beider Wellen entspricht den Figuren 13 und 14. Auf eine Kulisse wie in den vorgehenden Figuren konnte in diesem Fall verzichtet werden. Aufgrund des nicht mehr vorhandenen axialen Verschiebens ist es notwendig, daß Stirnrad 4.1 an seiner Frontfläche etwas anzukuppen, sodaß beim Einschwenken der Wellen in die Arbeitsstellung insbesondere der mit der Schlagbohrwirkung behafteten Arbeitswelle 5.1 eine letztendlich schubfeste Verbindung entsteht.

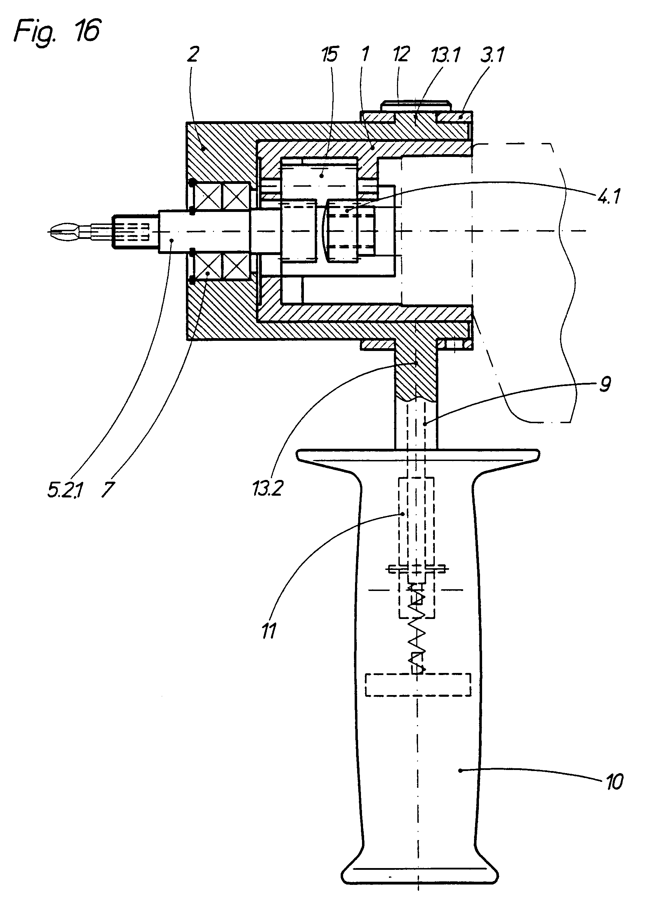

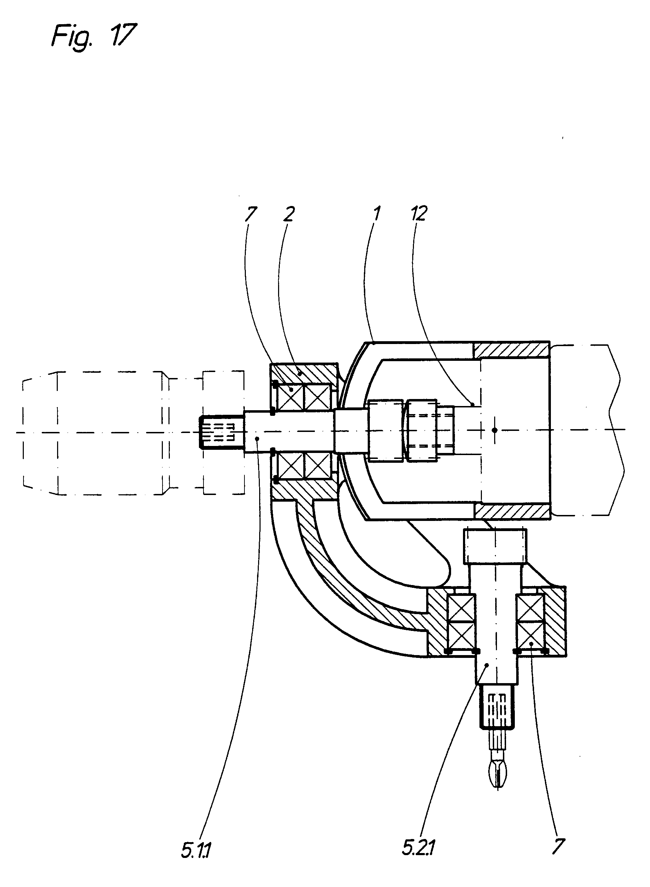

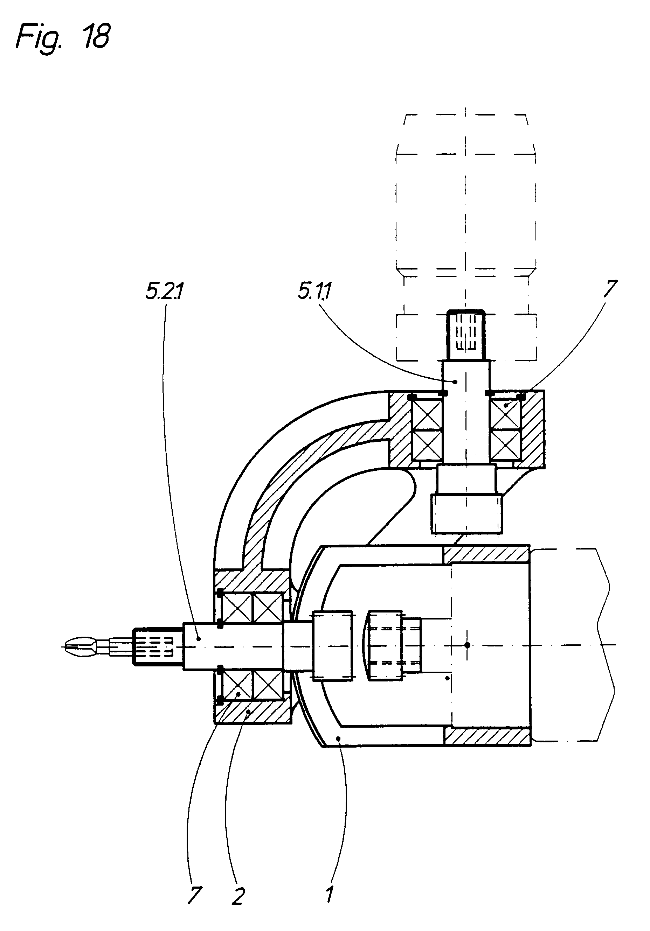

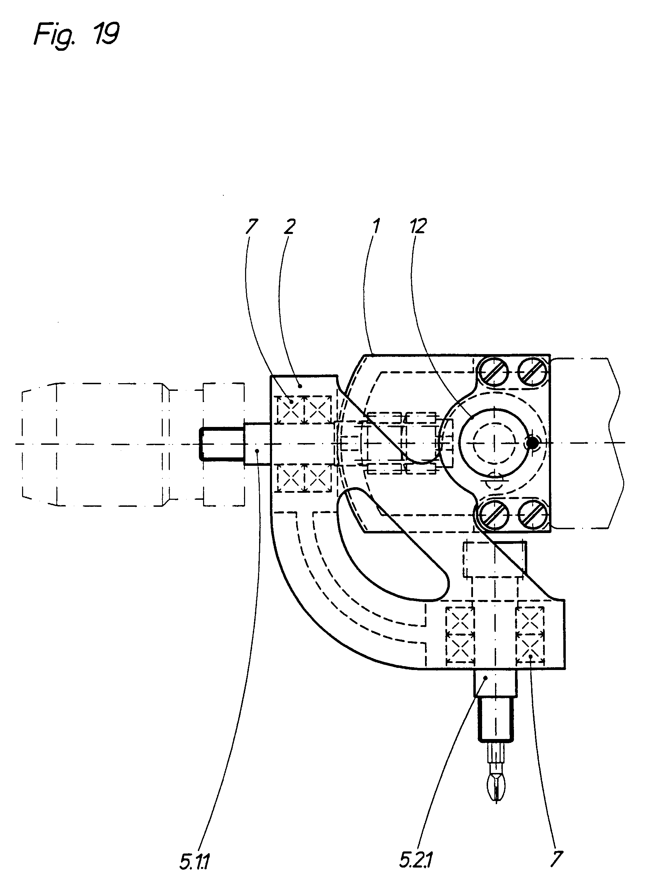

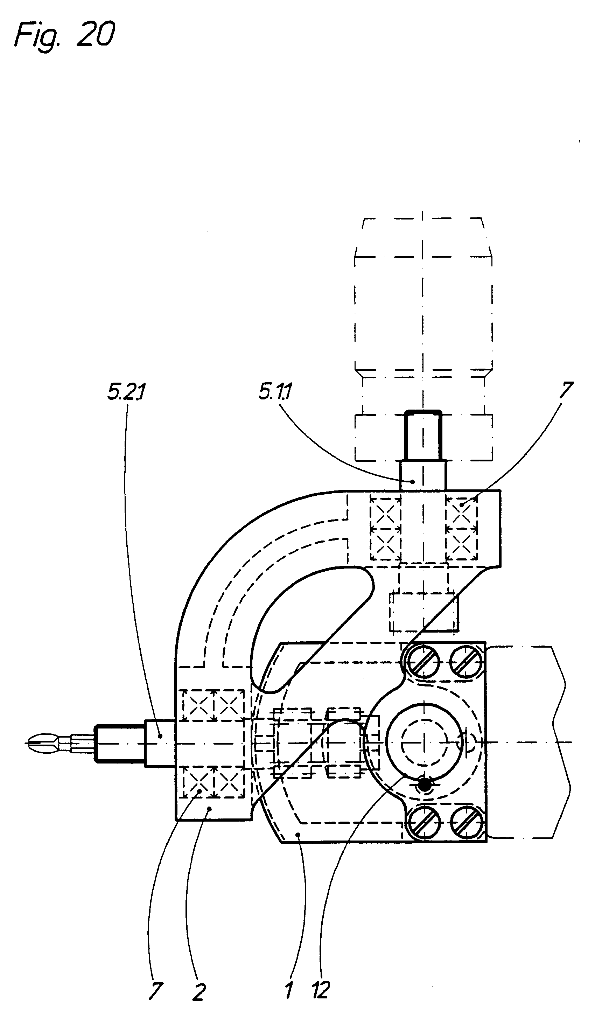

Figur 15 und 16 entsprechen hierbei den Ansichten der Figuren 1 und 3 während die Figuren 17 und 18 eine horizontale Schnittzeichnung durch die in der Figur 15 und 16 dargestellten Arbeitsstellungen zeigen, wobei die Figuren 19 und 20 eine entsprechende Draufsicht zeigen. Besonders in der Draufsicht ist zu sehen, daß bei dieser Ausführung keine Kulisse mehr benutzt wird, um die beiden Arbeitswellen in ihre Arbeitsstellung zu bringen, sondern daß durch einfaches Schwenken des Zweifachhalters um eine Achse das gewünschte Auswechseln der in Betrieb befindlichen Arbeitswellen erreicht wird.

## Patentansprüche

1. Zweifach-Werkzeugträger für Handbohrmaschinen mit folgenden Merkmalen :
1.1 es sind zwei Wellen (5.1, 5.2) zur Aufnahme je eines Werkzeuges - z.B. Bohrfutter, Schraubeinsatz, etc. - vorgesehen;
1.2 die Wellen (5.1, 5.2) bilden miteinander einen Winkel, der das jeweils nicht eingesetzte Werkzeug aus dem Arbeitsbereich ausschwenkt;
1.3 es ist eine Vorrichtung vorgesehen, die die beiden Werkzeugaufnahmewellen (5.1, 5.2) wechselseitig kraftschlüssig mit der Antriebswelle der Bohrmaschine verbindet;
1.4 die Wellen (5.1, 5.2) und die Antriebswelle der Bohrmaschine liegen in einer Ebene;
1.5 es ist ein drehfest mit der Antriebswelle verbundener Mitnehmer (4) vorgesehen;
1.6 es ist eine Glocke (1) vorgesehen, die fest mit dem Maschinengehäuse verbunden ist;
1.7 es ist von der Glocke (1) geführt ein Schwenklager (2) vorgesehen;
1.8 die beiden Wellen (5.1, 5.2) sind im Schwenklager (2) gelagert;
1.9 es ist mindestens eine Kulissenführung (3.1) für das Schwenklager (2) vorgesehen, die die Schwenkbewegung des Schwenklagers (2) führt, so daß die jeweils in Arbeitsstellung befindliche Welle (5.1, 5.2) drehfest mit dem Mitnehmer (4) verbunden ist;
1.10 es ist eine mechanische Verriegelung (9) vorgesehen, die ein ungewolltes Schwenken des Schwenklagers (2) verhindert;
1.11 die beiden Werkzeugaufnahmewellen (5.1, 5.2) sind um eine zu ihrer Ebene senkrechten Schwenkachse verschwenkbar;
1.12 das Schwenklager (2) weist einen Schwenkzapfen (13.2) auf, der koaxial zur Schwenkachse verläuft;
1.13 der Schwenkzapfen (13.2) ist in einem Handgriff (10) gelagert;
1.14 am Handgriff (10) ist ein Betätigungsorgan (11) vorgesehen, mit dem das Aus- bzw. Einrasten der mechanischen Verriegelung (9) betätigbar ist.

2. Werkzeugträger gemäß Anspruch 1, dadurch gekennzeichnet, daß zur Kraftübertragung von Antriebswelle zur in Arbeitsstellung befindlichen Welle (5.1, 5.2):
2.1 der Mitnehmer (4) als Stirnrad ausgeführt ist;
2.2 die Wellen (5.1, 5.2) des Werkzeugträgers an ihrem hinteren Ende mit je einem Stirnrad versehen sind; und
2.3 zur Übertragung der Antriebsleistung auf die Welle (5.1, 5.2) ein Stirnrad vorgesehen ist, welches die Antriebswelle mit der jeweiligen Welle (5.1, 5.2) in Arbeitsstellung koppelt.

3. Werkzeugträger gemäß Anspruch 2, dadurch gekennzeichnet, daß
3.1 der Mitnehmer (4) einen Innenvielkant aufweist;
3.2 der Mitnehmer (4) je Kante eine V-förmige Einkerbung zu seiner offenen Seite hin aufweist;
3.3 die von dem Mitnehmer (4) anzutreibende Welle (5.1, 5.2) auf ihrer Verbidnungslänge zum Mitnehmer (4) einen entsprechenden Außenvielkant aufweist; wobei
3.4 jede Fläche des Außenvielkants an seinem in den Mitnehmer (4) einführenden Ende eine ebene Anphasung aufweist.

4. Werkzeugräger gemäß einem der Ansprüche 1 bis 3, dadurch gekennzeichnet, daß die Kulissenführung (3, 1) derart ausgestaltet ist, daß zum Entkoppeln und Koppeln von Welle (5.1, 5.2) und Mitnehmer (4) vor der Schwenkbewegung jeweils eine Bewegung in axialer Richtung ausgeführt ist.

5. Werkzeugträger gemäß einem der Ansprüche 1 bis 4, dadurch gekennzeichnet, daß ein zusätzlicher Handgriff (10) am Schwenklager (2) zu dessen Verschwenken vorgesehen ist.

6. Werkezugträger gemäß Ansprüche 1 bis 5, dadurch gekennzeichnet, daß die mechanische Verriegelungsvorrichtung (9, 11) im Handgriff (10) integriert vorgesehen ist.

7. Werkzeugträger gemäß einem der Ansprüche 1-6, dadurch gekennzeichnet, daß die Lagerung mindestens einer Welle (5.1, 5.2) Spiel in axialer Richtung aufweist, so daß die Schlagwirkung einer Schlagbohrmaschine übertragen werden kann.

8. Werkzeugträger gemäß einem der Ansprüche 1-7, dadurch gekennzeichnet, daß
8.1 die drehfeste Verbindung zwischen Welle (5.1, 5.2) und Antriebswelle bei mindestens einer Welle (5.1, 5.2) axiales Spiel mindestens in Höhe des Schlagbohrhubes aufweist, wobei
8.2 die entsprechende Welle (5.1, 5.2) in Abwesenheit von axialem Spiel gelagert ist.

## Claims

1. Twin tool holder for handheld drilling machines with the following features:
1.1 two shafts (5.1, 5.2) are provided to each accommodate a tool, for example a drill chuck, screwdriver, etc.;
1.2 the shafts (5.1, 5.2) are at an angle which pivots a respective not inserted tool out of the operating area;
1.3 a device is provided which alternately positively connects both tool accommodation shafts (5.1, 5.2) to the driveshaft of the drilling machine;
1.4 the shafts (5.1, 5.2) and the driveshaft of the drilling machine are positioned in one plane;
1.5 a pickup (4) is provided which is non-rotationally connected to the driveshaft;
1.6 a dome (1) is provided which is firmly connected to the machine housing;
1.7 a pivotal mount (2) is provided which is guided by the dome (1) ;
1.8 the two shafts (5.1, 5.2) are mounted in the pivotal mount (2);
1.9 at least one link guide (3.1) for the pivotal mount (2) is provided which guides the pivotal movement of the pivotal mount (2) in such a manner that the respective shaft (5.1, 5.2) in its operative position is non-rotationally connected to the pickup (4);
1.10 a mechanical locking (9) is provided which prevents unwanted pivoting of the pivotal mount (2);
1.11 both tool accommodation shafts (5.1, 5.2) are pivotal around a pivotal axis which is vertical relative to their plane;
1.12 the pivotal mount (2) comprises a pivotal pin (13.2) which extends coaxially to the pivotal axis;
1.13 the pivotal pin (13.2) is mounted in a handle (10);
1.14 on the handle (10) is provided an operating element (11) by means of which the detention and release of the mechanical locking (9) is operated.

2. Tool holder according to Claim 1, **characterised in that** for the purpose of force transfer from the driveshaft to the shaft (5.1, 5.2) in its operative position
2.1 the pickup (4) is designed to be a spur wheel;
2.2 the shafts (5.1, 5.2) of the tool holder are at their rear end provided with a respective spur wheel; and
2.3 for the purpose of transferring a drive output to the shaft (5.1, 5.2), a spur wheel is provided which connects the driveshaft to the respective shaft (5.1, 5.2) in its operative position.

3. Tool holder according to Claim 2, **characterised in that**
3.1 the pickup (4) includes an interior polygon;
3.2 the pickup (4) comprises for each edge a V-shaped notch towards its open side;
3.3 the shaft (5.1, 5.2) which is to be driven by the pickup (4) has on its connecting length to the pickup (4) a respective exterior polygon; and
3.4 each surface of the exterior polygon has at its end which leads into the pickup (4) a plane phase-in.

4. Tool holder according to one of Claims 1 to 3, **characterised in that** the link guide (3.1) is designed in such a way that prior to a pivotal movement a respective movement in the axial direction is performed for coupling and decoupling of shaft (5.1, 5.2) and pickup (4).

5. Tool holder according to one of Claims 1 to 4, **characterised in that** an additional handle (10) on the pivotal mount (2) is provided for pivoting it.

6. Tool holder according to Claims 1 to 5, **characterised in that** the mechanical locking mechanism (9, 11) is integrated in the handle (10).

7. Tool holder according to one of Claims 1 to 6, **characterised in that** the mounting of at least one shaft (5.1, 5.2) has a play in the axial direction, so that the percussion effect of a percussion drilling apparatus can be transferred.

8. Tool holder according to one of Claims 1 to 7, **characterised in that**
8.1 the non-rotational connection between shaft (5.1, 5.2) and driveshaft has at least at one shaft (5.1, 5.2) an axial play at least at the level of the percussion drill stroke; and
8.2 the respective shaft (5.1, 5.2) is mounted in the absence of axial play.

## Revendications

1. Porte-outil double pour perceuses manuelles, présentant les propriétés ci-après :
1.1 il est prévu deux arbres **(5.1, 5.2)**, pour recevoir chacun un outil - par exemple un mandrin de perçage, un insert de vissage, etc. - ;
1.2 les arbres **(5.1, 5.2)** forment ensemble un angle, que l'outil non utilisé doit respectivement parcourir par pivotement, pour passer hors de la plage de travail;
1.3 il est prévu un dispositif, assurant la liaison entre les deux arbres de support d'outil **(5.1, 5.2)**, alternativement, avec transmission mécanique des efforts à un arbre d'entraînement de la perceuse.
1.4 les arbres **(5.1, 5.2)** et l'arbre d'entraînement de la perceuse sont situés dans un même plan;
1.5 il est prévu un organe d'entraînement **(4)**, relié de façon assujettie en rotation à l'arbre d'entraînement;
1.6 il est prévu une cloche **(1)**, reliée rigidement au carter de perceuse;
1.7 il est prévu un palier de pivotement **(2)** guidé par la cloche **(1)**
1.8 les deux arbres **(5.1, 5.2)** tourillonnent dans le palier de pivotement **(2)**;
1.9 il est prévu, pour le palier de pivotement **(2)**, au moins un guidage coulissant **(3.1)** qui guide le mouvement pivotant du palier de pivotement **(2)**, de manière que l'arbre **(5.1, 5.2)** respectif se trouvant en position de travail soit relié de façon assujettie en rotation à l'organe d'entraînement **(4)**;
1.10 il est prévu un verrouillage mécanique **(9)**, empêchant tout pivotement intempestif du palier de pivotement **(2)**;
1.11 les deux arbres de support d'outil **(5.1, 5.2)** sont susceptibles de pivoter autour d'un axe de pivotement perpendiculaire à son plan;
1.12 le palier de pivotement **(2)** présente un tourillon de pivotement **(13.2)** s'étendant coaxialement par rapport à l'axe de pivotement;
1.13 le tourillon de pivotement **(13.2)** tourillonne dans une poignée **(10)** ;
1.14 un organe d'actionnement **(11)**, à l'aide duquel le décliquetage ou l'encliquetage du verrouillage mécanique **(9)** peut être actionné, est prévu sur la poignée **(10)**.

2. Porte-outil selon la revendication 1, caractérisé en ce que, pour assurer la transmission mécanique entre l'arbre d'entraînement et l'arbre **(5.1, 5.2)** se trouvant en position de travail :
2.1 l'organe d'entraînement **(4)** est réalisé sous forme d'engrenage à denture droite;
2.2 les arbres **(5.1, 5.2)** du porte-outil sont respectivement pourvus, à leur extrémité arrière, d'un engrenage à denture droite; et
2.3 pour assurer la transmission de la puissance d'entraînement à l'arbre **(5.1, 5.2)** est prévu un engrenage à denture droite, qui accouple l'arbre d'entraînement à l'arbre **(5.1, 5.2)** respectif, dans la position de travail.

3. Porte-outil selon la revendication 2, caractérisé en ce que :
3.1 l'organe d'entraînement **(4)** présente un quatre-pans intérieur;
3.2 l'organe d'entraînement **(4)** présente pour chaque pan une entaille en forme de V orientée vers son côté ouvert;
3.3 l'arbre **(5.1, 5.2)** entraîné par l'organe d'entraînement **(4)** présente sur sa longueur de liaison vis-à-vis de l'organe d'entraînement **(4)** un quatre-pans extérieur correspondant: où
3.4 chaque surface du quatre-pans extérieur présente, sur son extrémité s'introduisant dans l'organe d'entraînement **(4)**, un chanfreinage plan.

4. Porte-outil selon l'une des revendications 1 à 3, caractérisé en ce que le guidage coulissant **(3.1)** est réalisé de manière que, pour assurer le désaccouplent et l'accouplement entre arbre **(5.1, 5.2)** et organe d'entraînement **(4)**, il est chaque fois effectué un mouvement en direction axiale, précédant le mouvement de pivotement.

5. Porte-outil selon l'une des revendications 1 à 4, caractérisé en ce que une poignée **(10)** supplémentaire est prévue sur le palier de pivotement **(2)**, pour assurer son pivotement.

6. Porte-outil selon les revendications 1 à 5, caractérisé en ce que le dispositif de verrouillage **(9, 11)** mécanique est prévu pour être intégré dans la poignée **(10)**.

7. Porte-outil selon l'une des revendications 1 à 6, caractérisé en ce que le montage de tourillonnement d'au moins un arbre **(5.1, 5.2)** présente un jeu en direction axiale, de manière à pouvoir transmettre l'effet de percussion d'une perceuse à percussion.

8. Porte-outil selon l'une des revendications 1 à 7, caractérisé en ce que :
8.1 la liaison assujettie en rotation entre l'arbre **(5.1, 5.2)** et l'arbre d'entraînement présente, pour au moins un arbre **(5.1, 5.2)**, un jeu axial, au moins au niveau de la course de la perceuse à percussion,
8.2 l'arbre **(5.1, 5.2)** correspondant étant monté à rotation en l'absence de tout jeu axial.
